# EUROPEAN PATENT SPECIFICATION

(11) **EP 3 819 556 B1**
(45) Date of publication and mention of the grant of the patent: **23.07.2025**
(21) Application number: 19830394.3
(22) Date of filing: 21.06.2019
(51) Int. Cl.: F25B 1/00, F25B 1/10, F25B 13/00, F25B 49/02

(54) **REFRIGERATION CYCLE DEVICE AND METHOD FOR CONTROLLING SAME**
KÜHLKREISLAUFVORRICHTUNG UND VERFAHREN ZUR STEUERUNG DAVON
DISPOSITIF À CYCLE FRIGORIFIQUE ET SON PROCÉDÉ DE COMMANDE

(30) Priority: 06.07.2018 JP 2018128686
(43) Date of publication of application: 12.05.2021
(73) Proprietor: MITSUBISHI HEAVY INDUSTRIES THERMAL SYSTEMS, LTD., 108-8215 Tokyo (JP)
(72) Inventor: KATSURAYAMA, Yohei, Tokyo 100-8332 (JP); AKATSUKA, Kei, Tokyo 108-8215 (JP); KUROIWA, Toru, Tokyo 108-8215 (JP)
(74) Representative: Cabinet Beau de Loménie
(86) International application number: PCT/JP2019/024744
(87) International publication number: WO 2020/008916

(56) References cited:
- JP-A- 2000 283 568
- JP-A- 2001 272 121
- JP-A- H07 294 029
- JP-B2- 4 069 733
- TELLO-OQUENDO FERNANDO M ET AL: "A comprehensive study of two-stage vapor compression cycles with vapor-injection for heating applications, taking into account heat sink of finite capacity", INTERNATIONAL JOURNAL OF REFRIGERATION, ELSEVIER, AMSTERDAM, NL, vol. 93, 2 June 2018 (2018-06-02), pages 52 - 64, XP085495765, ISSN: 0140-7007, DOI: 10.1016/J.IJREFRIG.2018.05.039

## Description

### Technical Field

The present invention relates to a refrigeration cycle device including a refrigerant circuit through which a refrigerant flows, and a method for controlling the refrigeration cycle device.

JP 4069733 B2 deals with a refrigerating device according to the preamble of claim 1 and a control method according to the preamble of claim 4.

### Background Art

In recent years, a shift toward refrigerants with low global warming potentials (GWPs) has been in progress to reduce environmental burden. Representative examples of low-GWP refrigerants include HF0-1234yf that was developed as an alternative refrigerant for HFC-134a.

However, when a single-component refrigerant with a low GWP, such as HF0-1234yf, is used, the pressure obtained by a refrigerant circuit tends to be low. Therefore, to supplement the pressure, a low-GWP refrigerant, such as HF0-1234yf, is sometimes used by being mixed with a refrigerant, for example, R32.

A mixture of two or more types of refrigerants having different boiling points like HF0-1234yf and R32 is called a zeotropic refrigerant. It is known that when a single-component refrigerant is used, the temperature of the refrigerant remains constant during a condensation process and an evaporation process, whereas when a zeotropic refrigerant is used, the temperature of the refrigerant changes during a condensation process and an evaporation process. This change in the refrigerant temperature is called a temperature glide.

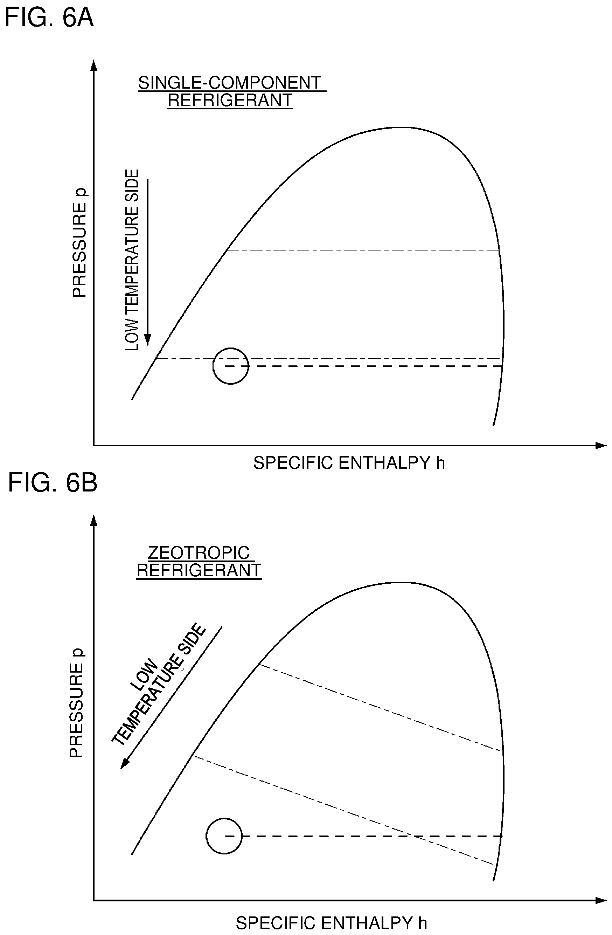

In FIG. 6A, an evaporation process when a single-component refrigerant is used is represented by the dashed line. In FIG. 6B, an evaporation process when a zeotropic refrigerant is used is represented by the dashed line. In each of FIGS. 6A and 6B, isothermal lines of equal refrigerant temperatures are represented by the long dashed short dashed lines. In each of FIGS. 6A and 6B, an evaporator inlet is represented by a circle surrounding it.

When a zeotropic refrigerant is used, the refrigerant temperature tends to be lower closer to the evaporator inlet due to the temperature glide. Therefore, when a zeotropic refrigerant is used, formation of frost on the evaporator occurs during heating operation, such as space heating, even at a higher outside air temperature compared with when a single-component refrigerant is used.

In Patent Literature 1, to suppress the decrease in the inlet temperature of an evaporator due to a temperature glide of a zeotropic refrigerant, a second expansion valve is disposed in the middle of an evaporation process, separately from a first expansion valve that is located upstream of the evaporator. The refrigerant temperature is lowered and an average evaporation temperature is raised by this second expansion valve to thereby raise the inlet temperature of the evaporator and suppress frost formation.

### Citation List

### Patent Literature

Patent Literature 1: JP 2009-222357 A

### Summary of Invention

### Technical Problem

The method of Patent Literature 1 involves not only a device cost for the second expansion valve but also a cost required to divide the evaporator so as to dispose the second expansion valve in the evaporation process, which adds to manufacturing costs related mainly to devices.

It is therefore desirable to achieve a solution by control of the refrigerant circuit, with as few changes as possible made to the devices.

Thus, regarding a refrigerant circuit using a zeotropic refrigerant, the present invention aims to provide a refrigeration cycle device that can suppress the decrease in the inlet temperature of an evaporator due to a temperature glide while keeping costs down, and a method for controlling this refrigeration cycle device.

### Solution to Problem

A refrigeration cycle device of one aspect of the present invention is defined in claim 1.

In the refrigeration cycle device of the present invention, it is preferable that the refrigeration cycle device be capable of heating operation of heating the heat load by the refrigerant circuit, and that, during the heating operation, the first heat exchanger function as an evaporator and the second heat exchanger function as a condenser.

In the refrigeration cycle device of the present invention, it is preferable that the refrigerant circuit further have at least one of the following: a temperature sensor that detects the evaporator inlet temperature; an air temperature sensor that detects a temperature of an atmosphere near an evaporator; and a pressure sensor that detects a pressure of the refrigerant at a start point of the evaporation process, and that the index be specified using at least one of a temperature detected by the temperature sensor, a temperature detected by the air temperature sensor, and a pressure detected by the pressure sensor.

Further, another aspect of the present invention is a method defined in claim **4.**

### Advantageous Effects of Invention

The refrigerant circuit included in the refrigeration cycle device of the present invention can be configured just like an existing refrigerant circuit of the same type, without any addition of a constituent element to a refrigerant circuit of the same type that includes two stages of compressors and performs injection of an intermediate pressure.

Further, in the present invention, as will be described in detail later, when it is necessary to suppress the decrease in the evaporator inlet temperature, increasing the intermediate pressure and controlling the rotation speed of the first compressor can reduce the injection amount and raise the evaporator inlet temperature without affecting the refrigeration performance.

Thus, it is possible to suppress the decrease in the evaporator inlet temperature that tends to decrease due to use of a zeotropic refrigerant, and to suppress formation of frost on the evaporator during heating operation, while keeping costs down and securing performance.

### Brief Description of Drawings

[FIG. 1] FIG. 1 is a view schematically showing a refrigeration cycle device according to an embodiment of the present invention. "Evaporation process" and "condensation process" are indicated based on those during heating operation.
[FIG. 2] FIG. 2A and FIG. 2B are p-h charts according to the embodiment of the present invention, FIG. 2A showing a refrigeration cycle without control for mitigating a decrease in an evaporator inlet temperature by the dashed lines, and FIG. 2B showing, in addition to the refrigeration cycle without the control for mitigating the decrease in the evaporator inlet temperature, a refrigeration cycle with the control for mitigating the decrease in the evaporator inlet temperature by the solid lines.
[FIG. 3] FIG. 3 is a chart showing a procedure of the control for mitigating the decrease in the evaporator inlet temperature according to the embodiment of the present invention.
[FIG. 4] FIG. 4A is a schematic view illustrating a frost formation mitigating effect of the control for mitigating the decrease in the evaporator inlet temperature. FIG. 4B is a graph showing a correspondence relationship between an index indicating the evaporator inlet temperature and a target value for an intermediate pressure.
[FIG. 5] FIG. 5 is a view schematically showing a refrigeration cycle device not according to the present invention "Evaporation process" and "condensation process" are indicated based on those during heating operation.
[FIG. 6] FIG. 6A is a chart showing a refrigerant temperature trend when a single-component refrigerant is used, and FIG. 6B is a chart showing a refrigerant temperature trend when a zeotropic refrigerant is used. Description of Embodiment

An embodiment of the present invention will be described below with reference to the accompanying drawings.

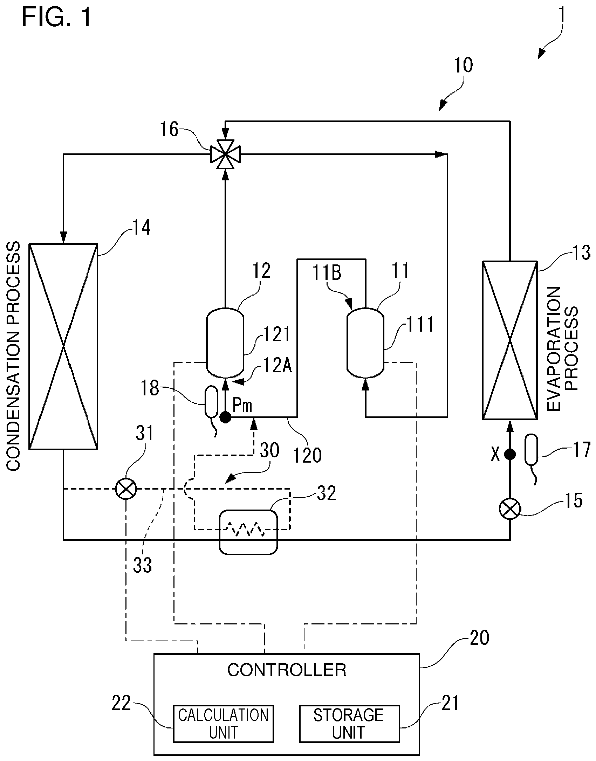

A refrigeration cycle device 1 shown in FIG. 1 includes a refrigerant circuit 10 through which a zeotropic refrigerant flows and a controller 20 that controls the refrigerant circuit 10.

The refrigeration cycle device 1 can be configured as various devices including a refrigerant circuit through which a refrigerant flows, for example, as an air conditioner, a refrigerator, a water heater, and a heat pump.

### Zeotropic Refrigerant

A zeotropic refrigerant refers to a mixture of two or more types of refrigerants having different boiling points. For example, a mixture of HF0-1234yf and R32 falls under the category of a zeotropic refrigerant. Other examples of zeotropic refrigerants include a refrigerant mixture of HF0-1234ze and R32 and a refrigerant mixture of hydrocarbon and R32.

The zeotropic refrigerant (hereinafter referred to simply as the refrigerant) is enclosed in the refrigerant circuit 10 at a predetermined mixing ratio and circulates through the refrigerant circuit 10.

Due to a temperature glide of the zeotropic refrigerant in an evaporation process (FIG. 6B), the temperature of the refrigerant at an evaporator inlet tends to be low compared with when a single-component refrigerant is used (FIG. 6A).

The decrease in the refrigerant temperature at the inlet of the evaporator can be suppressed by control performed by the controller 20 of the embodiment. Thus, during heating operation of the refrigeration cycle device 1, occurrence of formation of frost on the evaporator can be suppressed.

### Refrigerant Circuit

The refrigerant circuit 10 (FIG. 1) has a low-stage compressor 11 (first compression mechanism), a high-stage compressor 12 (second compression mechanism), two heat exchangers 13, 14 (a first heat exchanger and a second heat exchanger), a first depressurization part 15, an intermediate pressure injection part 30 (an intermediate pressure supply part) including a second depressurization part 31, and a four-way valve 16.

The refrigerant circuit 10 can perform both cooling operation and heating operation as a flow direction of the refrigerant is switched by the four-way valve 16.

In FIG. 1, a direction in which the refrigerant flows through the refrigerant circuit 10 during heating operation is indicated by arrows.

The refrigeration cycle device 1 cools or heats a heat load using outside air as a heat source, by a refrigeration cycle consisting of processes of expansion and evaporation due to compression, condensation, and depressurization of the refrigerant flowing through the refrigerant circuit 10.

The refrigeration cycle device 1 may be configured such that the performance can be varied according to the fluctuating heat load, or may be configured to have constant performance regardless of the heat load.

The refrigerant circuit 10 has the multi-stage compressors 11, 12, and the intermediate pressure injection part 30 between the compressors 11, 12 that supplies the refrigerant at an intermediate pressure **Pm.** Therefore, compared with when the same refrigerating performance is obtained by single-stage compression, the refrigerant circuit 10 can secure compression efficiency and keep down the temperature of the refrigerant discharged from the compressors.

The configuration of the refrigerant circuit 10 is equivalent to a configuration typical of a refrigerant circuit of the same type that includes the low-stage compressor 11, the high-stage compressor 12, and the intermediate pressure injection part 30. The refrigerant circuit 10 of the embodiment can be composed only of constituent elements that are included in a refrigerant circuit of the same type.

### Compressor

Each of the low-stage compressor 11 and the high-stage compressor 12 compresses the refrigerant by rotating scrolls or a rotary piston or moving vanes back and forth using a power source, such as an electric motor.

The low-stage compressor 11 includes an appropriate compression mechanism (not shown), for example, a scroll compression mechanism, and a housing 111 that houses the compression mechanism. The low-stage compressor 11 may include a plurality of compression mechanisms inside the housing 111.

Similarly, the high-stage compressor 12 includes an appropriate compression mechanism (not shown), for example, a scroll compression mechanism, and a housing 121 that houses the compression mechanism. The high-stage compressor 12 may include a plurality of compression mechanisms inside the housing 121.

Each of the low-stage compressor 11 and the high-stage compressor 12 is configured such that the operating speed of the compression mechanism can be varied based on a command from the controller 20. For example, in the case of an electric scroll compressor having a motor as a power source, the rotation speed of the scroll is controlled as a driving current generated by a driving device provided in the compressor is applied to the motor based on a command indicating the rotation speed of the scroll.

Hereinafter, the operating speed will be referred to as the rotation speed based on the assumption of a compression mechanism that compresses a refrigerant by rotary motion.

The refrigerant compressed by the low-stage compressor 11 is suctioned into the high-stage compressor 12 and compressed to a higher pressure. A discharge part 11B through which the refrigerant is discharged from the low-stage compressor 11 and an introduction part 12A through which the refrigerant is introduced into the high-stage compressor 12 are connected to each other by a pipe 120.

### Heat Exchanger

The first heat exchanger 13 exchanges heat between outside air that is a heat source and the refrigerant. The first heat exchanger 13 functions as a condenser during cooling operation and functions as an evaporator during heating operation.

The second heat exchanger 14 exchanges heat between air, water, or the like that is a heat load and the refrigerant. The second heat exchanger 14 functions as an evaporator during cooling operation and functions as a condenser during heating operation.

For the first and second heat exchangers 13, 14 in FIG. 1, the processes (evaporation process/condensation process) of which the respective heat exchangers are in charge during heating operation are indicated.

### First Depressurization Part

The first depressurization part 15 reduces the pressure of the refrigerant having undergone the condensation process. As the first depressurization part 15, an expansion valve, a capillary tube, or the like can be used.

### Intermediate Pressure Injection Part

During each of heating operation and cooling operation, the intermediate pressure injection part 30 supplies the second compressor 12 with the refrigerant at the intermediate pressure Pm that is reduced with respect to the pressure of the refrigerant having undergone the condensation process.

The intermediate pressure injection part 30 of the embodiment includes the second depressurization part 31 and an internal heat exchanger 32.

The second depressurization part 31 reduces the pressure of part of the refrigerant having undergone the condensation process and supplies the refrigerant to the internal heat exchanger 32. The refrigerant that has undergone the condensation process in the first heat exchanger 13 or the second heat exchanger 14 flows through an injection flow passage 33 toward the second compressor 12 via the second depressurization part 31 and the internal heat exchanger 32.

As the second depressurization part 31, an expansion valve, a combination of a capillary tube and a valve, or the like can be used.

The second depressurization part 31 is typically an expansion valve, and an extent of closing thereof is controlled in accordance with a command from the controller 20.

The internal heat exchanger 32 performs heat exchange between a primary refrigerant that, after undergoing the condensation process, flows toward the first depressurization part 15 without flowing into the second depressurization part 31, and a secondary refrigerant of which the pressure is reduced by the second depressurization part 31, and thereby cools the primary refrigerant.

Compared with the primary refrigerant flowing through the internal heat exchanger 32, the secondary refrigerant of which the pressure has been reduced by the second depressurization part 31 has a low pressure and a low temperature. Therefore, in the internal heat exchanger 32, the primary refrigerant flowing through the path indicated by the solid line and the secondary refrigerant flowing through the path indicated by the dashed line give and receive heat to and from each other based on a temperature difference. In the internal heat exchanger 32, heat exchange is basically performed between the primary refrigerant that is a high-pressure fluid and the secondary refrigerant that is a low-pressure gas. The secondary refrigerant that is further gasified by absorbing heat from the primary refrigerant in the internal heat exchanger 32 is supplied to the second compressor 12.

The amount (injection amount) of the refrigerant supplied to the second compressor 12 through the second depressurization part 31 and the internal heat exchanger 32 can be adjusted by controlling the second depressurization part 31 and thereby adjusting the flow rate of the refrigerant flowing into the second depressurization part 31.

The efficiency of heat exchange in the internal heat exchanger 32 depends on the temperature difference between the primary refrigerant and the secondary refrigerant; therefore, the controller 20 reduces the opening of the second depressurization part 31 and reduces the injection amount when the temperature of the secondary refrigerant rises. The second depressurization part 31 may be fully closed. When the temperature difference between the primary refrigerant and the secondary refrigerant is small, the secondary refrigerant may be supplied to the high-stage compressor 12 without being sufficiently gasified in the internal heat exchanger 32. Also to avoid this, the controller 20 reduces the opening of the second depressurization part 31 and reduces the injection amount.

The temperature of the secondary refrigerant rises as the pressure (the intermediate pressure Pm) of the refrigerant supplied to the high-stage compressor 12 increases. Therefore, when the intermediate pressure Pm detected by a pressure sensor 18 located between the low-stage compressor 11 and the high-stage compressor 12 is higher, the controller 20 further reduces the injection amount by reducing the opening of the second depressurization part 31. As the injection amount decreases, the amount of the refrigerant flowing from the condenser to the first depressurization part 15 increases accordingly.

The intermediate pressure injection part 30 of the embodiment sprays the refrigerant at an intermediate pressure into the pipe 120 connecting the low-stage compressor 11 and the high-stage compressor 12 to each other, and thereby supplies the refrigerant at the intermediate pressure **Pm,** along with the refrigerant discharged from the low-stage compressor 11, into the housing 121 of the high-stage compressor 12.

However, it is also possible to configure the intermediate pressure injection part 30 so as to supply the refrigerant at the intermediate pressure to the second compressor 12, separately from the refrigerant discharged from the low-stage compressor 11.

### Refrigeration Cycle

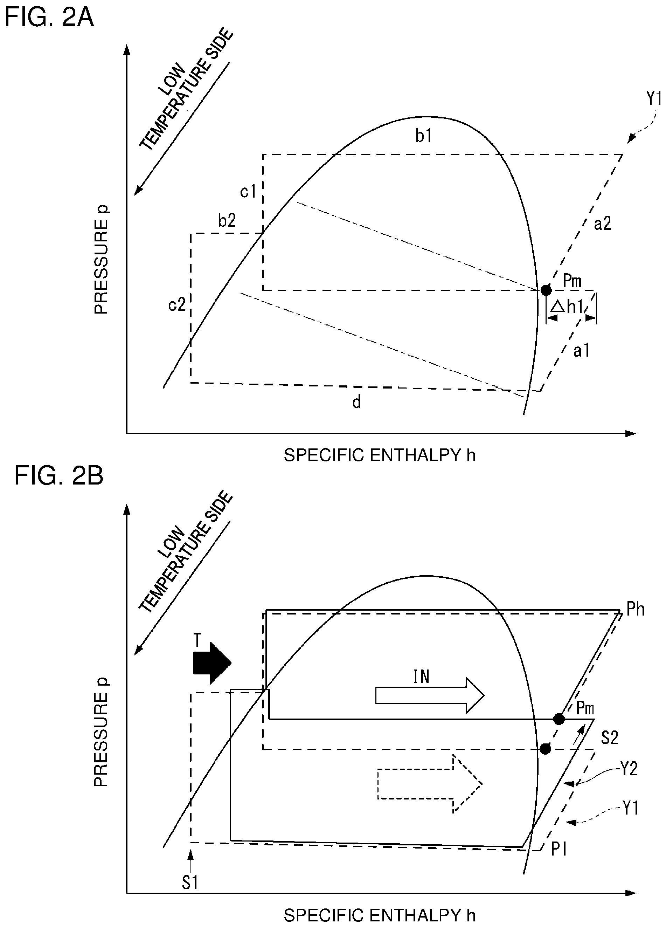

Refrigeration cycles of the refrigerant circuit 10 are shown in FIGS. 2A and 2B.

In FIG. 2A, a refrigeration cycle Y1 when control for mitigating the decrease in the evaporator inlet temperature, to be described later, is not executed by the controller 20 is represented by the dashed lines.

In FIG. 2B, in addition to the refrigeration cycle Y1, a refrigeration cycle Y2 when the control for mitigating the decrease in the evaporator inlet temperature, to be described later, is executed by the controller 20 is represented by the solid lines.

First, the refrigeration cycle Y1 shown in FIG. 2A will be described.

A compression process in the refrigeration cycle Y1 consists of a compression process a1 by the low-stage compressor 11 and a compression process a2 by the high-stage compressor 12.

Here, the pressure at a border between the compression process a1 and the compression process a2 corresponds to the intermediate pressure Pm that is supplied to the high-stage compressor 12 by the intermediate pressure injection part 30. As the refrigerant discharged from the low-stage compressor 11 is cooled by the refrigerant at the intermediate pressure Pm, the temperature of the refrigerant suctioned into the compression mechanism of the high-stage compressor 12 decreases by an amount corresponding to Δh1.

The refrigerant having been compressed by the low-stage compressor 11 and the high-stage compressor 12 undergoes a condensation process b1 by a condenser (e.g., the second heat exchanger 14), and is further condensed as the heat thereof is absorbed in the internal heat exchanger 32 by part of the refrigerant that has been depressurized. Then, in the example shown in FIG. 2A, the refrigerant is supercooled (b2).

When the condensation process consisting of the condensation process b1, and a condensation process b2 by the internal heat exchanger 32 is ended, the pressure of the refrigerant is reduced by the first depressurization part 15 (c2). A depressurization process of the refrigeration cycle Y1 consists of a depressurization process c1 by the second depressurization part 31 and a depressurization process c2 by the first depressurization part 15.

The refrigerant having undergone the depressurization process c2 undergoes an evaporation process d by an evaporator (e.g., the first heat exchanger 13) and reaches the compression process a1.

### Controller

The controller 20 (FIG. 1) controls operations of elements included in the refrigerant circuit 10, such as various valves including the depressurization parts 15, 31, and the compressors 11, 12, by using measurement values of temperatures, pressures, etc. detected by various sensors and set values of temperatures, pressures, etc. that are specified in advance.

The controller 20 is applied to the refrigerant circuit 10 including the low-stage compressor 11 and the high-stage compressor 12 that are connected in series, and the intermediate pressure injection part 30 that supplies the high-stage compressor 12 with the refrigerant at the intermediate pressure Pm.

The controller 20 that controls the refrigerant circuit 10 sends a command to the second depressurization part 31, which is an expansion valve or the like, according to fluctuations in the heat load, an operation status, etc., and can thereby adjust the amount (injection amount) of the refrigerant supplied to the high-stage compressor 12 by the intermediate pressure injection part 30. Such control is similar to control by a typical controller used for a refrigerant circuit that supplies the high-stage compressor 12 with a refrigerant at the intermediate pressure Pm.

As described above, when a zeotropic refrigerant mixture is used, the inlet temperature of the evaporator tends to decrease compared with when a single-component refrigerant is used. To suppress such a decrease in the evaporator inlet temperature and suppress formation of frost on the evaporator especially during heating operation, the controller 20 of the embodiment controls the rotation speed of the compression mechanism of each of the low-stage compressor 11 and the high-stage compressor 12 based on an index that indicates the evaporator inlet temperature.

The "evaporator inlet temperature" corresponds to the temperature of the refrigerant at a start point of the evaporation process by either the first heat exchanger 13 or the second heat exchanger 14.

Here, for controllers used for refrigerant circuits in general, a high pressure Ph that is a pressure at a condenser (corresponding to the pressure of the refrigerant discharged from the high-stage compressor 12) and a low pressure Pl that is a pressure at an evaporator (corresponding to the pressure of the refrigerant suctioned into the low-stage compressor 11) are set. In a case where an intermediate-pressure refrigerant is supplied to the high-stage compressor 12, the intermediate pressure Pm is set in addition to the high pressure Ph and the low pressure Pl. The intermediate pressure Pm is typically set to a middle value between the high pressure Ph and the low pressure Pl, or a value close to the middle value. The controller 20 executes feedback control on the rotation speed of the high-stage compressor 12 based on the high pressure Ph and executes feedback control on the rotation speed of the low-stage compressor 11 based on the intermediate pressure Pm.

At normal times, a balance between the rotation speed of the low-stage compressor 11 and the rotation speed of the high-stage compressor 12 is maintained at a predetermined ratio under control by the controller 20.

As described above, while executing basic control of the refrigerant circuit 10, including the control for adjusting the injection amount by the second depressurization part 31 and the rotation speed control of the compressors 11, 12 based on the high pressure Ph and the intermediate pressure Pm, the controller 20 increases the rotation speed of the low-stage compressor 11 when it is necessary to suppress the decrease in the evaporator inlet temperature based on an index X indicating the evaporator inlet temperature. As a result, the rotation speed of the high-stage compressor 12 decreases as will be described later. Thus, as a result of increasing the rotation speed of the low-stage compressor 11, the rotation speed ratio between the compressors 11, 12 changes from that at normal times. It is preferable that the rotation speed control of the low-stage compressor 11 and the high-stage compressor 12 executed to suppress the decrease in the evaporator inlet temperature be executed prior to the control of the second depressurization part 31 etc. so as not to affect the performance of the refrigeration cycle device 1. This will be described later.

To execute the control for mitigating the decrease in the inlet temperature of the evaporator, the controller 20 uses the index X indicating the temperature at the evaporator inlet. This index X is specified using a temperature sensor 17 that detects the evaporator inlet temperature.

The temperature sensor 17 is mounted near an inlet of the first heat exchanger 13 that functions as an evaporator during heating operation. For the purpose of mitigating formation of frost on the evaporator during heating operation, it suffices to mount the temperature sensor 17 near the inlet of the first heat exchanger 13.

It is also possible to specify the index X using a temperature detected by a temperature sensor (air temperature sensor) that detects the temperature of an atmosphere (outside air) near the evaporator, instead of the temperature sensor 17.

Or, instead of the temperature sensor 17 and the air temperature sensor, a pressure sensor that detects the pressure of the refrigerant at the evaporator inlet can be mounted near the inlet of the evaporator. The index X can be specified using a pressure detected by this pressure sensor. Since the pressure sensor directly detects the temperature of the refrigerant inside the evaporator, the index X that appropriately indicates the refrigerant temperature at the evaporator inlet can be specified, compared with when a temperature sensor that is usually mounted on an outer side of an evaporator and detects the temperature of a refrigerant through a member of the evaporator is used.

The index X may also be specified using two or more of the temperature sensor 17, the air temperature sensor, and the pressure sensor.

In addition, the temperature and the dryness of the refrigerant at an outlet of the evaporator can also be used to specify the index X.

The index X can be specified in advance based on tests performed by operating the refrigeration cycle device 1, simulations, etc. The index X may be stored in a storage unit 21 of the controller 20, and the index X may be retrieved from the storage unit 21 to be used for control.

The controller 20 can be configured as a computer including a calculation unit 22 and the storage unit 21. In this case, creating a computer program corresponding to control executed by the controller 20 and running this computer program can realize the control executed by the controller 20.

### Control of Refrigeration Cycle Device

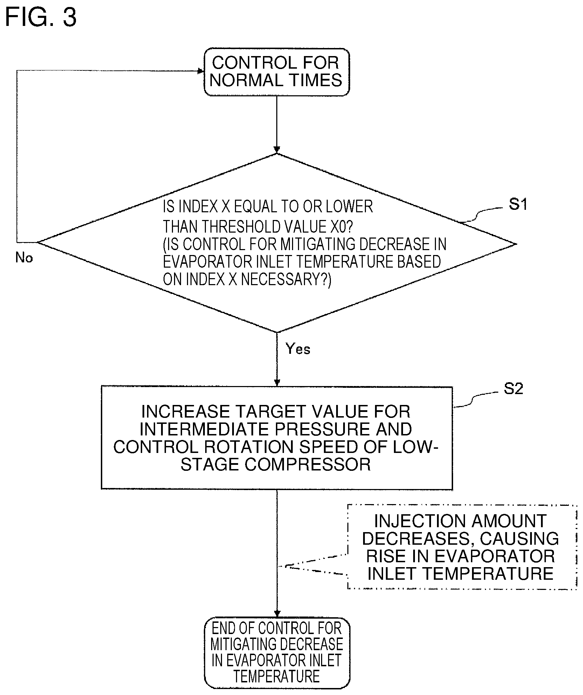

Control by the controller 20 when the evaporator inlet temperature decreases will be described with reference to FIG. 3, FIG. 2A and FIG. 2B. This control is equivalent to control for mitigating formation of frost on the evaporator during heating operation.

The controller 20 determines whether it is necessary to suppress the decrease in the evaporator inlet temperature based on the index X indicating the evaporator inlet temperature (determination step S1). For example, when the temperature detected by the temperature sensor 17 is the index X, it is determined to be necessary to suppress the decrease in the evaporator inlet temperature if the temperature detected by the temperature sensor 17 is equal to or lower than a threshold value.

When it is determined to be necessary to suppress the decrease in the evaporator inlet temperature by the determination step S1 (Yes in step S1), the rotation speed of the low-stage compressor 11 is increased (rotation speed control step S2).

Other than determining the necessity of mitigating the decrease in the evaporator inlet temperature using the threshold value as in the determination step S1, for example, the temperature may be repeatedly measured by the temperature sensor 17 during a certain period of time, and when the measured value of the temperature exceeds a reference a predetermined number of times or more, the controller 20 may move to step S2 and the subsequent steps.

In the rotation speed control step S2, the controller 20 increases a target value for the intermediate pressure Pm and executes feedback control on the rotation speed of the low-stage compressor 11 such that the intermediate pressure Pm meets the target value, and thereby increases the rotation speed of the low-stage compressor 11. This is for the following reasons.

As the intermediate pressure Pm increases, the temperature of the refrigerant increases, so that the opening of the second depressurization part 31 is reduced and the injection amount decreases as described above. As the injection amount decreases, the enthalpy at the evaporator inlet increases, causing a rise in the evaporator inlet temperature.

Here, when the injection amount decreases, the flow rate of the refrigerant flowing through the evaporator increases. Meanwhile, the low pressure Pl (the suction pressure of the low-stage compressor 11) remains the same, and therefore the rotation speed of the low-stage compressor 11 is increased to increase the circulation amount of the refrigerant.

The rotation speed of the high-stage compressor 12 in this case will be described.

When the heat load does not change, the high pressure Ph does not change and the circulation amount of the refrigerant does not change. However, due to the increase in the intermediate pressure Pm supplied to the high-stage compressor 12 by the intermediate pressure injection part 30, the density of the refrigerant suctioned into the high-stage compressor 12 increases. Therefore, the rotation speed of the high-stage compressor 12 needs to be reduced in order to maintain the same circulation amount.

In step S2, feedback control is executed on the rotation speed of the high-stage compressor 12 by the controller 20 so as to maintain a constant high pressure Ph, so that the rotation speed of the high-stage compressor 12 decreases.

As a result of execution of the control shown in FIG. 3, the refrigeration cycle of the refrigerant circuit 10 changes from the state (Y1) represented by the dashed lines to the state (Y2) represented by the solid lines as shown in FIG. 2B.

As described above, when it is determined to be necessary to suppress the decrease in the evaporator inlet temperature based on the index X (Yes in step S1), the controller 20 increases the target value for the intermediate pressure Pm and increases the rotation speed of the low-stage compressor 11 (step S2). Then, the intermediate pressure Pm increases, and as described above, the rotation speed of the high-stage compressor 12 decreases while the low pressure Pl and the high pressure Ph remain the same.

In response to the increase in the intermediate pressure, the opening of the second depressurization part 31 is reduced by the basic control by the controller 20 relating to the injection amount. As a result, an injection amount IN (represented by the thickness of the outlined arrow in FIG. 2B) decreases.

When the opening of the second depressurization part 31 is reduced, the flow rate of the secondary refrigerant decreases, so that the enthalpy at an outlet of the internal heat exchanger 32 increases. Similarly, as the enthalpy at the evaporator inlet also increases, causing a rise in an evaporator inlet temperature T (the black arrow in FIG. 2B).

The control of the embodiment can raise the evaporator inlet temperature compared with the case represented by the dashed lines in FIG. 2B in which the control for mitigating the decrease in the evaporator inlet temperature is not executed.

The control having been described above is possible both during heating operation and during cooling operation.

With the evaporator inlet temperature raised by the control according to the embodiment, occurrence of formation of frost on the evaporator (the first heat exchanger 13) can be suppressed during heating operation.

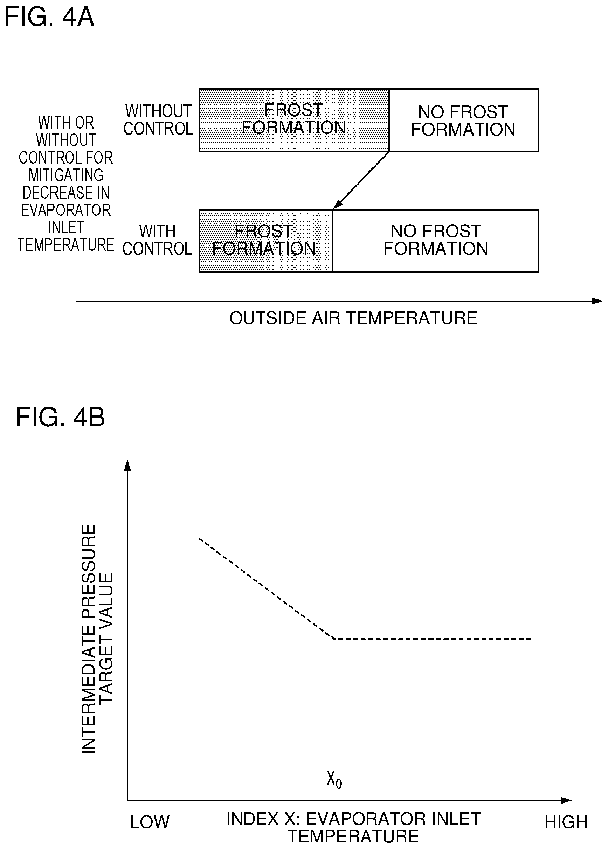

FIG. 4A shows a difference in a temperature region of formation of frost on the evaporator according to with or without the above-described control for mitigating the decrease in the evaporator inlet temperature. When this control is not executed (top), frost forms already at a relatively high outside air temperature, whereas when this control is executed (bottom), the outside air temperature at which formation of frost occurs can be lowered.

After shifting from the control for normal times to the control for mitigating the decrease in the evaporator inlet temperature (step S2), the controller 20 may return to the control for normal times, for example, when the index X exceeds a predetermined threshold value. The threshold value in this case can be set to be larger than the threshold value at which the controller 20 shifts from the control for normal times to the control for mitigating the decrease in the evaporator inlet temperature.

Alternatively, the controller 20 may return to the control for normal times regardless of the index X when a predetermined time has elapsed after the controller 20 shifts to the control for mitigating the decrease in the evaporator inlet temperature.

Instead of controlling the rotation speeds of the low-stage compressor 11 and the high-stage compressor 12 based on the index X as described above, similar control may be performed when the controller 20 is set to a predetermined mode for mitigating the decrease in the evaporator inlet temperature. Specifically, when the controller 20 is set to this mode, the controller 20 increases the target value for the intermediate pressure Pm and controls the rotation speed of the low-stage compressor 11 such that the intermediate pressure Pm meets the target value. In this case, the rotation speed of the low-stage compressor 11 increases while the rotation speed of the high-stage compressor 12 decreases. Then, the injection amount decreases, which can suppress the decrease in the evaporator inlet temperature.

### Effects of Embodiment

The refrigerant circuit 10 of the refrigeration cycle device 1 of the embodiment can be configured just like an existing refrigerant circuit of the same type, without any addition of a constituent element to a refrigerant circuit of the same type that has the two-stage compressors 11, 12 and the intermediate pressure injection part 30. There is no need to divide the evaporator and add an expansion valve.

Further, the controller 20 of the refrigeration cycle device 1 can be configured simply by adding, to basic control of a controller that is applied to a refrigerant circuit of the same type as the refrigerant circuit 10, the control of increasing the intermediate pressure Pm and increasing the rotation speed of the low-stage compressor 11 when it is necessary to suppress the decrease in the evaporator inlet temperature.

Thus, the refrigeration cycle device 1 can suppress the decrease in the inlet temperature of the evaporator due to a temperature glide attributable to a zeotropic refrigerant, and suppress formation of frost on the evaporator during heating operation, while keeping costs down by being able to use an existing refrigerant circuit 10.

Instead of controlling the rotation speeds of the compressors 11, 12, controlling the flow rate in the second depressurization part 31 so as to reduce the injection amount can also suppress the decrease in the temperature at the evaporator inlet.

However, when the injection amount is simply reduced, the temperature of the secondary refrigerant at the outlet of the internal heat exchanger 32 rises due to an increase in the flow rate of the primary refrigerant corresponding to the amount of decrease in the injection amount, and if the intermediate pressure Pm remains the same, the temperature of the refrigerant suctioned into the high-stage compressor 12 may rise excessively.

In addition, the performance may degrade temporarily during a process in which the control of the rotation speeds of the compressors 11, 12 responds to the decrease in the injection amount due to the control of the second depressurization part 31.

In the embodiment, to suppress the decrease in the evaporator inlet temperature, the rotation speeds of the compressors 11, 12 are controlled before the injection amount is reduced by the control of the second depressurization part 31. According to the embodiment, the rotation speed of the high-stage compressor 12 is controlled so as to maintain the high pressure Ph. Therefore, required predetermined performance of the refrigeration cycle device 1 can be secured without the performance thereof being affected. Moreover, the temperature of the refrigerant suctioned into the high-stage compressor 12 can be kept down to secure the reliability.

When increasing the target value for the intermediate pressure, it can be increased to a fixed pressure, or to a variable pressure that is specified according to predetermined conditions. Or the target value can be increased to a pressure obtained by adding a fixed increase amount or a variable increase amount to a current intermediate pressure target value.

The degree of necessity of mitigating the decrease in the evaporator inlet temperature can be said to change according to the index X. From this perspective, it is preferable that when increasing the target value for the intermediate pressure, the target value be set to a value corresponding to the index X that is variable.

FIG. 4B shows a correspondence relationship between the index X and the intermediate pressure target value when the index X is the temperature detected by the temperature sensor 17 that detects the evaporator inlet temperature. Here, it is assumed that required refrigeration performance is constant.

When it is determined to be necessary to suppress the decrease in the evaporator inlet temperature based on the index X being low relative to a reference temperature X₀, the intermediate pressure target value is set such that the intermediate pressure target value varies according to the index X, in this example, the target value becomes higher as the index X becomes lower. When the intermediate pressure target value is higher, the intermediate pressure Pm increases further and the injection amount decreases further accordingly.

Therefore, controlling the rotation speeds of the compressors 11, 12 while giving the controller 20 an intermediate pressure target value corresponding to the index X allows efficient operation of the refrigeration cycle device 1 while reliably mitigating the decrease in the evaporator inlet temperature.

It is preferable that the index X and the intermediate pressure target value be stored in the storage unit 21 of the controller 20, so as to correspond to each other, over a predetermined variable range of the index X.

As described above, it is preferable that the rotation speeds of the compressors 11, 12 be controlled while an intermediate pressure target value corresponding to the varying index X is given to the controller 20, also after the controller 20 is set to the predetermined mode for mitigating the decrease in the evaporator inlet temperature.

### Modified Examples

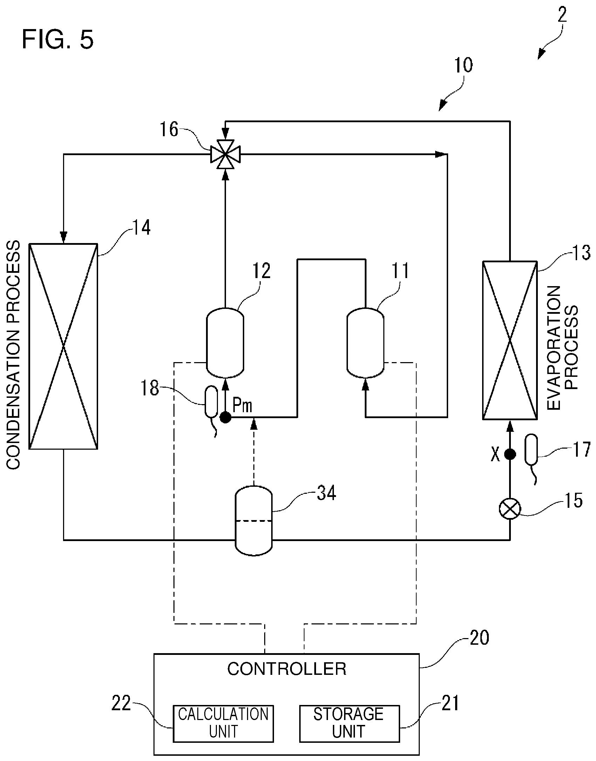

Next, a refrigeration cycle device 2 according to a modified example of the present invention will be described with reference to FIG. 5.

In the following description, matters that are different from the above-described embodiments will be mainly described. The same components as in the above-described embodiment are denoted by the same reference signs.

In the example shown in FIG. 5, a receiver 34 (second depressurization part) is used as a mechanism that supplies the high-stage compressor 12 with the refrigerant at an intermediate pressure. The receiver 34 is integrated in the refrigerant circuit 10 in place of the second depressurization part 31 and the internal heat exchanger 32.

The receiver 34 receives and stores a high-pressure liquid refrigerant having undergone the condensation process, and depressurizes this refrigerant. The pressure of the refrigerant having flowed into the receiver 34 is reduced inside the receiver 34. Inside the receiver 34, the refrigerant is separated into a liquid and a gas due to the difference in density between a liquid phase and a gas phase of the refrigerant. The gas refrigerant inside the receiver 34 is supplied to the high-stage compressor 12.

It is assumed that it is determined to be necessary to suppress the decrease in the evaporator inlet temperature based on the index X that is the temperature detected by the temperature sensor 17.

In this case, as in the above-described embodiment, the intermediate pressure target value is increased and the rotation speed of the low-stage compressor 11 is controlled (increased) such that the intermediate pressure Pm meets the intermediate pressure target value.

As a result, the intermediate pressure Pm increases, so that the amount, i.e., the injection amount, of the refrigerant supplied from the receiver 34 to the high-stage compressor 12 based on the pressure difference between the inside of the receiver 34 and the intermediate pressure Pm decreases. Accordingly, the decrease in the evaporator inlet temperature can be suppressed.

According to a configuration not according to the invention as shown in FIG. 5, there is no need for the second depressurization part 31 and the internal heat exchanger 32 shown in FIG. 1, so that the configuration of the refrigerant circuit 10 is simplified. Thus, costs can be kept further down compared with the above-described embodiment.

The refrigeration cycle device of the present invention is not limited to one that is used for both heating and cooling a heat load but may be configured exclusively for heating or exclusively for cooling. In this case, the four-way valve 16 is not required.

In some cases, a low-stage-side first compression mechanism and a high-stage-side second compression mechanism are disposed inside a housing of one compressor and an intermediate-pressure refrigerant is supplied to between the first compression mechanism and the second compression mechanism. The controller 20 can be applied also to a refrigerant circuit including such a compressor.

The present invention can be applied also to a refrigerant circuit that includes three or more compressors connected in series and that is configured such that a refrigerant at an intermediate pressure is supplied to at least one of the compressors.

### Reference Signs List

1, 2 Refrigeration cycle device
10 Refrigerant circuit
11 Low-stage compressor (first compression mechanism)
11B Discharge part
12 High-stage compressor (second compression mechanism)
12A Introduction part
13 First heat exchanger
14 Second heat exchanger
15 First depressurization part
16 Four-way valve
17 Temperature sensor
18 Pressure sensor
20 Controller
21 Storage unit
22 Calculation unit
30 Intermediate pressure injection part (intermediate pressure supply part)
31 Second depressurization part
32 Internal heat exchanger
33 Injection flow passage
34 Receiver (second depressurization part)
111 Housing
120 Pipe
121 Housing
a1, a2 Compression process
b1, b2 Condensation process
c1, c2 Depressurization process
d Evaporation process
IN Injection amount
Ph High pressure
P1 Low pressure
Pm Intermediate pressure
S1 Determination step
S2 Rotation speed control step
T Evaporator inlet temperature
X Index
Y1, Y2 Refrigeration cycle

## Claims

1. A refrigeration cycle device (1) comprising:
a zeotropic refrigerant;
a refrigerant circuit (10) through which the zeotropic refrigerant flows; and
a controller (20) configured to control elements composing the refrigerant circuit (10), wherein:
the refrigerant circuit (10) has:
a first compression mechanism (11) and a second compression mechanism (12) that are connected in series and compress the refrigerant;
a first heat exchanger (13) that exchanges heat between a heat source and the refrigerant;
a first depressurization part (15) that reduces a pressure of the refrigerant;
a second heat exchanger (14) that exchanges heat between a heat load and the refrigerant; and
an intermediate pressure supply part (30) that supplies the second compression mechanism (12) with the refrigerant at an intermediate pressure that is reduced with respect to a pressure of the refrigerant having undergone a condensation process (b2) by either the first heat exchanger (13) or the second heat exchanger (14);
wherein the intermediate pressure supply part comprises:
a second depressurization part (31) that reduces a pressure of part of the refrigerant that has undergone the condensation process (b2); and
an internal heat exchanger (32) that cools a primary refrigerant having a higher pressure than the intermediate pressure by exchanging heat between the primary refrigerant and a secondary refrigerant that is reduced in pressure by the second depressurization part (31); and
the intermediate pressure supply part (30) configured to supply the second compression mechanism (12) with the secondary refrigerant having passed through the internal heat exchanger (32); wherein
the controller (20) is configured to control operating speeds of the first compression mechanism (11) and the second compression mechanism (12)
**characterised in that**:
the controller (20) is configured to control the operating speeds of the first compression mechanism (11) and the second compression mechanism (12) based on an index indicating an evaporator inlet temperature that is a temperature at a start point of an evaporation process (d) by either the first heat exchanger (13) or the second heat exchanger (14), and
when a predetermined mode which is a predetermined mode for mitigating a decrease in the evaporator inlet temperature is set,
the controller (20) is configured to control the operating speeds of the first compression mechanism (11) and the second compression mechanism (12) and to increase a target value for the intermediate pressure and to control the operating speed of the first compression mechanism (11) such that the intermediate pressure meets the target value; and
the controller (20) has a storage unit that stores the index and the target value, so as to correspond to each other, over a predetermined variable range of the index.

2. The refrigeration cycle device (1) according to claim 1, wherein:
the refrigeration cycle device (1) is capable of heating operation of heating the heat load by the refrigerant circuit (10); and
during the heating operation, the first heat exchanger (13) functions as an evaporator and the second heat exchanger (14) functions as a condenser.

3. The refrigeration cycle device (1) according to claim 1 or 2, wherein:
the refrigerant circuit (10) further has at least one of the following:
a temperature sensor (17) that detects the evaporator inlet temperature;
an air temperature sensor that detects a temperature of an atmosphere near an evaporator; and
a pressure sensor (18) that detects a pressure of the refrigerant at a start point of the evaporation process (d); and
the index is specified using at least one of a temperature detected by the temperature sensor (17), a temperature detected by the air temperature sensor, and a pressure detected by the pressure sensor (18).

4. A method for controlling a refrigeration cycle device (1) including a refrigerant circuit (10) that is a circuit through which a zeotropic refrigerant flows and has a first compression mechanism (11), a second compression mechanism (12), and an intermediate pressure supply part (30) that supplies the second compression mechanism (12) with the refrigerant at an intermediate pressure that is reduced with respect to a pressure of the refrigerant having undergone a condensation process (b2), the method comprising:
reducing, by a second depressurization part (31) of the intermediate pressure supply part (30), a pressure of part of the refrigerant that has undergone the condensation process (b2); and
cooling, by an internal heat exchanger (32) of the intermediate pressure supply part (30), a primary refrigerant having a higher pressure than the intermediate pressure by exchanging heat between the primary refrigerant and a secondary refrigerant that is reduced in pressure by the second depressurization part (31); and
supplying, by the intermediate pressure supply part (30), the second compression mechanism (12) with the secondary refrigerant having passed through the internal heat exchanger; and
a control step of controlling operating speeds of the first compression mechanism (11) and the second compression mechanism (12);
**characterised in that** the method comprises:
controlling the operating speeds of the first compression mechanism (11) and the second compression mechanism (12) based on an index indicating an evaporator inlet temperature that is a temperature at a start point of an evaporation process (d) by either the first heat exchanger (13) or the second heat exchanger (14);
a determination step of determining, based on the index, whether it is necessary to suppress a decrease in the evaporator inlet temperature; and
a control step of controlling operating speeds of the first compression mechanism (11) and the second compression mechanism (12) when it is determined to be necessary to suppress the decrease in the evaporator inlet temperature, wherein a target value for the intermediate pressure is set to a value according to the index that is variable, and the operating speed of the first compression mechanism (11) is controlled such that the intermediate pressure meets the target value.

## Patentansprüche

1. Kühlkreislaufvorrichtung (1), umfassend:
ein zeotropes Kältemittel;
einen Kältemittelkreislauf (10), durch den das zeotrope Kältemittel strömt; und
eine Steuerung (20), die konfiguriert ist, um Elemente zu steuern, aus denen der Kältemittelkreislauf (10) besteht, wobei:
der Kältemittelkreislauf (10) Folgendes aufweist:
einen ersten Verdichtungsmechanismus (11) und einen zweiten Verdichtungsmechanismus (12), die in Reihe verbunden sind und das Kältemittel verdichten;
einen ersten Wärmetauscher (13), der Wärme zwischen einer Wärmequelle und dem Kältemittel austauscht;
ein erstes Druckentlastungsteil (15), das einen Druck des Kältemittels reduziert;
einen zweiten Wärmetauscher (14), der Wärme zwischen einer Wärmelast und dem Kältemittel austauscht; und
ein Zwischendruckzufuhrteil (30), das dem zweiten Verdichtungsmechanismus (12) Kältemittel bei einem Zwischendruck zuführt, der in Bezug auf einen Druck des Kältemittels, das einen Kondensationsprozess (b2) entweder durch den ersten Wärmetauscher (13) oder den zweiten Wärmetauscher (14) durchlaufen hat, reduziert ist;
wobei das Zwischendruckzufuhrteil Folgendes umfasst:
ein zweites Druckentlastungsteil (31), das den Druck eines Teils des Kältemittels, das den Kondensationsprozess (b2) durchlaufen hat, reduziert; und
einen internen Wärmetauscher (32), der ein primäres Kältemittel abkühlt, das einen höheren Druck als der Zwischendruck aufweist, indem er Wärme zwischen dem primären Kältemittel und einem sekundären Kältemittel austauscht, dessen Druck durch das zweite Druckentlastungsteil (31) reduziert wird; und
das Zwischendruckzufuhrteil (30), das konfiguriert ist, um dem zweiten Verdichtungsmechanismus (12) das sekundäre Kältemittel zuzuführen, nachdem es den internen Wärmetauscher (32) durchlaufen hat; wobei die Steuerung (20) konfiguriert ist, um Betriebsgeschwindigkeiten des ersten Verdichtungsmechanismus (11) und des zweiten Verdichtungsmechanismus (12) zu steuern,
**dadurch gekennzeichnet, dass**:
die Steuerung (20) konfiguriert ist, um die Betriebsgeschwindigkeiten des ersten Verdichtungsmechanismus (11) und des zweiten Verdichtungsmechanismus (12) basierend auf einem Index zu steuern, der eine Verdampfereintrittstemperatur angibt, die eine Temperatur an einem Startpunkt eines Verdampfungsprozesses (d) entweder durch den ersten Wärmetauscher (13) oder den zweiten Wärmetauscher (14) ist, und
wenn ein vorbestimmter Modus, der ein vorbestimmter Modus zum Abschwächen einer Abnahme der Verdampfereintrittstemperatur ist, eingestellt ist,
die Steuerung (20) konfiguriert ist, um die Betriebsgeschwindigkeiten des ersten Verdichtungsmechanismus (11) und des zweiten Verdichtungsmechanismus (12) zu steuern und einen Sollwert für den Zwischendruck zu erhöhen und die Betriebsgeschwindigkeit des ersten Verdichtungsmechanismus (11) zu steuern, sodass der Zwischendruck den Sollwert erfüllt; und
die Steuerung (20) eine Speichereinheit aufweist, die den Index und den Sollwert speichert, um über einen vorbestimmten variablen Bereich des Indexes einander zu entsprechen.

2. Kühlkreislaufvorrichtung (1) nach Anspruch 1, wobei:
die Kühlkreislaufvorrichtung (1) zu einem Heizvorgang eines Erwärmens der Wärmelast durch den Kältemittelkreislauf (10) in der Lage ist; und
während des Heizvorgangs der erste Wärmetauscher (13) als Verdampfer und der zweite Wärmetauscher (14) als Verflüssiger fungiert.

3. Kühlkreislaufvorrichtung (1) nach Anspruch 1 oder 2, wobei:
der Kältemittelkreislauf (10) ferner mindestens eines der Folgenden aufweist:
einen Temperatursensor (17), der die Verdampfereintrittstemperatur erfasst;
einen Lufttemperatursensor, der eine Temperatur einer Atmosphäre in der Nähe eines Verdampfers erfasst; und
einen Drucksensor (18), der einen Druck des Kältemittels am Startpunkt des Verdampfungsprozesses (d) erfasst; und
der Index unter Verwendung einer von dem Temperatursensor (17) erfassten Temperatur, einer von dem Lufttemperatursensor erfassten Temperatur und eines von dem Drucksensor (18) erfassten Drucks spezifiziert wird.

4. Verfahren zum Steuern einer Kühlkreislaufvorrichtung (1), die einen Kältemittelkreislauf (10) beinhaltet, der ein Kreislauf ist, durch den ein zeotropes Kältemittel strömt, und der einen ersten Verdichtungsmechanismus (11), einen zweiten Verdichtungsmechanismus (12) und ein Zwischendruckzufuhrteil (30) aufweist, das dem zweiten Verdichtungsmechanismus (12) Kältemittel bei einem Zwischendruck zuführt, der in Bezug auf einen Druck des Kältemittels, das einen Kondensationsprozess (b2) durchlaufen hat, reduziert ist, das Verfahren umfassend:
Reduzieren, durch ein zweites Druckentlastungsteil (31) des Zwischendruckzufuhrteils (30), eines Drucks eines Teils des Kältemittels, das den Kondensationsprozess (b2) durchlaufen hat; und
Abkühlen, durch einen internen Wärmetauscher (32) des Zwischendruckzufuhrteils (30), eines primären Kältemittels, das einen höheren Druck als der Zwischendruck aufweist, durch Austauschen von Wärme zwischen dem primären Kältemittel und einem sekundären Kältemittel, dessen Druck durch das zweite Druckentlastungsteil (31) reduziert wird; und
Zuführen, durch das Zwischendruckzufuhrteil (30), des zweiten sekundären Kältemittels zu dem zweiten Verdichtungsmechanismus (12), nachdem es den internen Wärmetauscher durchlaufen hat; und
einen Steuerschritt zum Steuern von Betriebsgeschwindigkeiten des ersten Verdichtungsmechanismus (11) und des zweiten Verdichtungsmechanismus (12);
**dadurch gekennzeichnet, dass** das Verfahren Folgendes umfasst:
Steuern der Betriebsgeschwindigkeiten des ersten Verdichtungsmechanismus (11) und des zweiten Verdichtungsmechanismus (12) basierend auf einem Index, der eine Verdampfereintrittstemperatur angibt, die eine Temperatur an einem Startpunkt eines Verdampfungsprozesses (d) entweder durch den ersten Wärmetauscher (13) oder den zweiten Wärmetauscher (14) ist;
einen Bestimmungsschritt, in dem basierend auf dem Index bestimmt wird, ob es notwendig ist, eine Abnahme der Verdampfereintrittstemperatur zu unterdrücken; und
einen Steuerschritt zum Steuern von Betriebsgeschwindigkeiten des ersten Verdichtungsmechanismus (11) und des zweiten Verdichtungsmechanismus (12), wenn bestimmt wird, dass es notwendig ist, die Abnahme der Verdampfereintrittstemperatur zu unterdrücken, wobei ein Sollwert für den Zwischendruck auf einen Wert gemäß dem Index gesetzt wird, der variabel ist, und die Betriebsgeschwindigkeit des ersten Verdichtungsmechanismus (11) gesteuert wird, sodass der Zwischendruck den Sollwert erfüllt.

## Revendications

1. Dispositif à cycle de réfrigération (1), comprenant :
un fluide frigorigène zéotrope ;
un circuit de fluide frigorigène (10) à travers lequel circule le fluide frigorigène zéotrope ; et
un contrôleur (20) configuré pour commander les éléments composant le circuit de fluide frigorigène (10), dans lequel :
le circuit de fluide frigorigène (10) présente :
un premier mécanisme de compression (11) et un deuxième mécanisme de compression (12) qui sont connectés en série et qui compriment le fluide frigorigène ;
un premier échangeur de chaleur (13) qui échange de la chaleur entre une source de chaleur et le fluide frigorigène ;
une première partie de dépressurisation (15) qui réduit une pression du fluide frigorigène ;
un deuxième échangeur de chaleur (14) qui échange de la chaleur entre une charge thermique et le fluide frigorigène ; et
une partie d'alimentation à pression intermédiaire (30) qui alimente le deuxième mécanisme de compression (12) avec le fluide frigorigène à une pression intermédiaire qui est réduite par rapport à la pression du fluide frigorigène ayant subi un processus de condensation (b2) par le biais du premier échangeur de chaleur (13) ou du deuxième échangeur de chaleur (14) ;
dans lequel la partie d'alimentation à pression intermédiaire comprend :
une deuxième partie de dépressurisation (31) qui réduit la pression d'une partie du fluide frigorigène ayant subi le processus de condensation (b2) ; et
un échangeur de chaleur interne (32) qui refroidit un fluide frigorigène primaire ayant une pression plus élevée que la pression intermédiaire, en échangeant de la chaleur entre le fluide frigorigène primaire et un fluide frigorigène secondaire dont la pression est réduite par la deuxième partie de dépressurisation (31) ; et
la partie d'alimentation à pression intermédiaire (30) est configurée pour alimenter le deuxième mécanisme de compression (12) avec le fluide frigorigène secondaire ayant traversé l'échangeur de chaleur interne (32) ; dans lequel
le contrôleur (20) est configuré pour commander les vitesses de fonctionnement du premier mécanisme de compression (11) et du deuxième mécanisme de compression (12) ;
**caractérisé en ce que** :
le contrôleur (20) est configuré pour commander les vitesses de fonctionnement du premier mécanisme de compression (11) et du deuxième mécanisme de compression (12), sur la base d'un indice indiquant une température d'entrée d'évaporateur qui est une température à un point de départ d'un processus d'évaporation (d), par le biais du premier échangeur de chaleur (13) ou du deuxième échangeur de chaleur (14), et
lorsqu'est défini un mode prédéterminé, qui est un mode prédéterminé pour atténuer une diminution de la température d'entrée d'évaporateur,
le contrôleur (20) est configuré pour commander les vitesses de fonctionnement du premier mécanisme de compression (11) et du deuxième mécanisme de compression (12), pour augmenter une valeur cible pour la pression intermédiaire, et pour commander la vitesse de fonctionnement du premier mécanisme de compression (11) de sorte que la pression intermédiaire atteint la valeur cible ; et
le contrôleur (20) présente une unité de stockage qui stocke l'indice et la valeur cible, de manière à ce que l'indice et la valeur cible correspondent l'un à l'autre, sur une plage variable prédéterminée de l'indice.

2. Dispositif à cycle de réfrigération (1) selon la revendication 1, dans lequel :
le dispositif à cycle de réfrigération (1) est apte à mettre en œuvre une opération de chauffage consistant à chauffer la charge thermique par le biais du circuit de fluide frigorigène (10) ; et
pendant l'opération de chauffage, le premier échangeur de chaleur (13) fonctionne comme un évaporateur et le deuxième échangeur de chaleur (14) fonctionne comme un condenseur.

3. Dispositif à cycle de réfrigération (1) selon la revendication 1 ou 2, dans lequel :
le circuit de fluide frigorigène (10) présente en outre au moins l'un des éléments suivants :
un capteur de température (17) qui détecte la température d'entrée d'évaporateur ;
un capteur de température d'air qui détecte la température de l'atmosphère à proximité d'un évaporateur ; et
un capteur de pression (18) qui détecte une pression du fluide frigorigène à un point de départ du processus d'évaporation (d) ; et
l'indice est spécifié à l'aide d'au moins l'une parmi une température détectée par le capteur de température (17), une température détectée par le capteur de température d'air et une pression détectée par le capteur de pression (18).

4. Procédé de commande d'un dispositif à cycle de réfrigération (1) comprenant un circuit de fluide frigorigène (10) qui est un circuit à travers lequel circule un fluide frigorigène zéotrope et qui présente un premier mécanisme de compression (11), un deuxième mécanisme de compression (12), et une partie d'alimentation à pression intermédiaire (30) qui alimente le deuxième mécanisme de compression (12) avec le fluide frigorigène à une pression intermédiaire qui est réduite par rapport à une pression du fluide frigorigène ayant subi un processus de condensation (b2), le procédé comprenant le fait de :
réduire, par le biais d'une deuxième partie de dépressurisation (31) de la partie d'alimentation à pression intermédiaire (30), une pression d'une partie du fluide frigorigène ayant subi le processus de condensation (b2) ; et
refroidir, par le biais d'un échangeur de chaleur interne (32) de la partie d'alimentation à pression intermédiaire (30), un fluide frigorigène primaire ayant une pression plus élevée que la pression intermédiaire, par le biais d'un échange de chaleur entre le fluide frigorigène primaire et un fluide frigorigène secondaire dont la pression est réduite par la deuxième partie de dépressurisation (31) ; et
alimenter, par le biais de la partie d'alimentation à pression intermédiaire (30), le deuxième mécanisme de compression (12), avec un fluide frigorigène secondaire ayant traversé l'échangeur de chaleur interne ; et
dans lequel le procédé comprend une étape de commande consistant à commander les vitesses de fonctionnement du premier mécanisme de compression (11) et du deuxième mécanisme de compression (12) ;
**caractérisé en ce que** le procédé comprend :
commander les vitesses de fonctionnement du premier mécanisme de compression (11) et du deuxième mécanisme de compression (12) sur la base d'un indice indiquant une température d'entrée d'évaporateur qui est une température à un point de départ d'un processus d'évaporation (d), par le biais du premier échangeur de chaleur (13) ou du deuxième échangeur de chaleur (14) ;
dans lequel le procédé comprend une étape de détermination consistant à déterminer, sur la base de l'indice, s'il est nécessaire de supprimer une diminution de la température d'entrée d'évaporateur ; et
dans lequel le procédé comprend une étape de commande consistant à commander les vitesses de fonctionnement du premier mécanisme de compression (11) et du deuxième mécanisme de compression (12) lorsqu'il est déterminé qu'il est nécessaire de supprimer la diminution de la température d'entrée d'évaporateur, dans lequel une valeur cible pour la pression intermédiaire est définie sur une valeur selon l'indice qui est variable, et la vitesse de fonctionnement du premier mécanisme de compression (11) est commandée de sorte que la pression intermédiaire atteint la valeur cible.
